**Europäisches Patentamt**

**European Patent Office**

**Office européen des brevets**

(19)

(11) Veröffentlichungsnummer: **0 416 238 A1**

## (12) EUROPÄISCHE PATENTANMELDUNG

(21) Anmeldenummer: **90113026.0**

(22) Anmeldetag: **07.07.90**

(51) Int. Cl.5: **F23C 11/02, F23J 3/04, B01J 8/18**

(30) Priorität: **02.09.89 DE 3929178**

(43) Veröffentlichungstag der Anmeldung:
**13.03.91 Patentblatt 91/11**

(84) Benannte Vertragsstaaten:
**DE ES GB IT**

(71) Anmelder: **Balcke-Dürr AG**
**Homberger Strasse 2 Postfach 1240**
**W-4030 Ratingen 1(DE)**

(72) Erfinder: **Bock, Peter**

Bahnstrasse 52
**W-4030 Ratingen 1(DE)**
Erfinder: **Giertz, Franz**
**Meiersweg 13**
**W-4030 Ratingen 1(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**W-4000 Düsseldorf 11(DE)**

(54) **Wirbelschichtreaktor und zugehöriges Betriebsverfahren.**

(57) Die Erfindung betrifft einen Wirbelschichtreaktor zur schadstoffarmen Verbrennung oder Vergasung von brennbaren Stoffen (6) unter Zugabe von schadstoffreduzierenden und/oder schadstoffbindenden Zuschlagstoffen (8) mit einer Kammer, in der inertes Wirbelschichtmaterial durch Trägergas (5) fluidisiert und auf Reaktionstemperatur gebracht wird und in der die brennbaren Stoffe (6) im unteren Teil der Kammer durch das Trägergas (5) unterstöchiometrisch und im oberen Teil durch in mehreren Teilströmen zugeführtes Reaktionsgas (7a,7b,7c) verbrannt oder vergast werden. Um auch bei größeren Baueinheiten eine kompakte Bauweise zu ermöglichen und günstige Reaktionsbedingungen zu schaffen, ist die Kammer als Ringkammer (1) ausgebildet und an ihrem ringförmigen Austrittsquerschnitt an einen innenliegenden Abscheider (2) angeschlossen, der seinerseits an einen Gaskanal (3) angeschlossen und mit einem Abzug (4) für das abgeschiedene Material versehen ist. Zur Erzeugung einer Rotationsströmung in der ringförmigen Wirbelschichtkammer kann das Trägergas (5) und/oder das Reaktionsgas (7a,7b,7c) tangential oder zumindest mit einer tangentialen Strömungskomponente in die Ringkammer (1) eingeführt werden.

Fig.1

## WIRBELSCHICHTREAKTOR UND ZUGEHÖRIGES BETRIEBSVERFAHREN

Die Erfindung betrifft einen Wirbelschichtreaktor und ein zugehöriges Betriebsverfahren zur schadstoffarmen Verbrennung oder Vergasung von brennbaren Stoffen in gasförmiger, flüssiger und fester Form, insbesondere von fossilen Brennstoffen und/oder industriellen sowie landwirtschaftlichen Rückständen, unter Zugabe von schadstoffreduzierenden und/oder schadstoffbindenden Zuschlagstoffen mit einer Kammer, in der inertes Wirbelschichtmaterial, vorzugsweise aus der Verbrennung oder Vergasung herrührende Asche und Zuschlagstoffe, durch mindestens teilweise durch den Kammerboden geführtes Trägergas fluidisiert und zur Verbrennung bzw. Vergasung der brennbaren Stoffe auf die hierfür erforderliche Reaktionstemperatur gebracht wird und in der die brennbaren Stoffe im unteren Teil der Kammer durch das Trägergas unterstöchiometrisch und im oberen Teil durch in mehreren Teilströmen zugeführtes Reaktionsgas verbrannt bzw. vergast werden, wobei das durch die Verbrennung bzw. Vergasung entstehende überschüssige Wirbelschichtmaterial abgezogen wird.

Ein Wirbelschichtreaktor der voranstehend beschriebenen Art ist aus der DE-PS 25 39 546 bekannt. Das im unteren Teil der Kammer befindliche und mittels durch den Kammerboden zugeführtes Trägergas fluidisierte Wirbelschichtmaterial, das vorzugs weise aus aus der Verbrennung oder Vergasung herrührender Asche und Zuschlagstoffen besteht, ermöglicht eine Direktentschwefelung der brennbaren Stoffe. Durch die gestufte Luftzuführung wird weiterhin eine $NO_x$-arme Verbrennung erreicht.

Bei der bekannten Konstruktion hat die die Wirbelschicht aufnehmende Kammer des Wirbelschichtreaktors einen rechteckigen, quadratischen oder kreisförmigen Querschnitt. Hierdurch ergibt sich insbesondere bei größeren Einheiten mit höherer Leistung eine sehr große Ausdehnung der Wirbelschicht quer zur Strömungsrichtung, wodurch sich Probleme für die gleichmäßige Zufuhr der brennbaren Stoffe und der Zuschlagstoffe ergeben und das Entstehen von Zonen mit sehr unterschiedlichen Reaktionsbedingungen nicht vermieden werden kann.

Der Erfindung liegt die Aufgabe zugrunde, einen Wirbelschichtreaktor der eingangs beschriebenen Art derart weiterzubilden, daß sich eine auch für größere Leistungen geeignete und dennoch kompakte Bauweise ergibt, die optimale Reaktionsbedingungen für die Verbrennung oder Vergasung der brennbaren Stoffe bei minimalen $SO_2$ und $NO_x$-Emissionen ergibt.

Die Lösung dieser Aufgabenstellung durch die Erfindung ist dadurch gekennzeichnet, daß die Kammer des Wirbelschichtreaktors als Ringkammer ausgebildet und an ihrem ringförmigen Austrittsquerschnitt an einen innenliegenden Abscheider angeschlossen ist, der seinerseits an einen Gaskanal angeschlossen und mit einem Abzug für das abgeschiedene Material versehen ist.

Durch den ringförmigen Kammerquerschnitt und den sich hieran anschließenden, innenliegenden Abscheider läßt sich die Feststoffbeladung im Eintritt des Gaskanals gezielt vorgeben, so daß unter Vermeidung eines unzulässig hohen Verschleisses der im Gaskanal angeordneten Bauteile, insbesondere von Wärmetauscherflächen, ein optimales Wärmeangebot erzielt werden kann. Weiterhin wird durch die erfindungsgemäße Ausbildung eine geringe radiale Ausdehnung der Wirbelschicht erzielt, die eine bessere Verteilung der von der Außenwand her eingeführten Brenn- und Zuschlagstoffe in der Wirbelschicht ermöglicht, so daß sich bei kompakter Bauweise des aus Wirbelschichtkammer und Abscheider bestehenden Systems auch bei größeren Leistungseinheiten günstigere Reaktionsbedingungen ergeben.

Durch die Gestaltung der Wirbelschichtkammer als Ringkammer und den innenliegenden Abscheider entstehen zwei konzentrische Kammerwände, so daß sich bei gleicher thermischer Leistung des Wirbelschichtreaktors eine Vergrößerung der durch die Kammerwände gebildeten Kühlflächen ergibt. Der Wirbelschicht des erfindungsgemäßen Wirbelschichtreaktors kann demzufolge über die Kammerwände je Meter Wirbelschichthöhe vergleichsweise mehr Wärme entzogen werden. Dies ermöglicht entweder eine weitere Verkleinerung des Bauvolumens oder eine Verringerung der zur Temperaturhaltung der Reaktionstemperatur des Wirbelschichtmaterials erforderlichen Feststoffmasse. Der Feststoff kann beim erfindungsgemäßen Wirbelschichtreaktor entweder im Durchlauf oder nach Kühlung im Umlauf zugeführt werden, um die Temperatur des Wirbelschichtmaterials auf der notwendigen Reaktionstemperatur zu halten, die wesentlich unterhalb der Verbrennungs- bzw. Vergasungstemperatur der brennbaren Stoffe liegt. Der erfindungsgemäße Abscheider kann schließlich als Ascherieselfilmkühler genutzt werden, um die abgekühlte Asche in die Wirbelschicht zurückzuführen.

Durch die kompakte Bauweise des erfindungsgemäßen Wirbelschichtreaktors kann dieser auch mit Druckaufladung betrieben werden. Der zentrale Rauchgasaustritt ermöglicht schließlich eine platzsparende Turmbauweise eines nachgeschalteten Dampferzeugers. Bei höheren Leistungsgrößen, in denen die bekannten Wirbelschichtreaktoren mit im Querschnitt rechteckigen oder kreisförmigen Kammern aufgrund der zu großen Reaktordurchmesser an Grenzen stoßen, ergeben sich beim erfindungsgemäßen Wirbelschichtreaktor aufgrund des kreisringförmigen Querschnitts der Wirbelkammer keinerlei Probleme, so daß der erfindungsgemäße Reaktor für Leistungsgrößen gebaut werden kann, bei denen die bekannten Konstruktionen mehrere Wirbelschichtreaktoren benötigen.

Gemäß einem weiteren Merkmal der Erfindung kann das Träger-und/oder Reaktionsgas tangential oder zumindest mit einer tangentialen Strömungskomponente in die Ringkammer eingeführt werden.

Hierdurch ergibt sich eine Rotationsströmung in der die Wirbelschicht aufnehmenden Ringkammer, die aufgrund des längeren Reaktionsweges und damit der längeren Verweilzeit in der Kammer günstigere Reaktionsbedingungen, insbesondere für Ausbrand und Schadstoffminderung schafft und Störungen durch Blasenbildung in der Wirbelschicht reduziert. Die Rotationsströmung der Wirbelschicht ergibt beim anschließenden Eintritt in den innenliegenden Abscheider eine Abscheidung durch Fliehkraft an den Außenwänden des Abscheiders, ohne daß hierfür verschleißanfällige Einbauten erforderlich sind. Schließlich wird durch die Rotationsströmung an der Außenwand der Ringkammer die Bindung von CO-Strähnen infolge der kälteren Wandtemperatur verringert, weil im wandnahen Bereich beim erfindungsgemäßen Wirbelschichtreaktor höhere Strömungsgeschwindigkeiten herrschen. Insgesamt werden somit die Reaktionsbedingungen verbessert, der Stoffaustrag aus der Wirbelschicht ver mindert und die Wärmeübergangszahlen erhöht.

Bei einer erfindungsgemäßen Weiterbildung des Wirbelschichtreaktors sind außer den durch die Wände der Ringkammern gebildeten Wärmetauschflächen zusätzliche Wärmetauschflächen in der Ringkammer und/oder im Abscheider angeordnet, so daß für den jeweiligen Anwendungsfall stets ausreichend Wärmetauschflächen zur Verfügung stehen.

Bei einer bevorzugten Ausführung sind die zusätzlichen Wärmetauschflächen als rohrförmige Verlängerung des Gaskanals in den Abscheider ausgebildet. Hierdurch wird auch der innerhalb der ringförmigen Wirbelschichtkammer liegende Abscheider mit einem ringförmigen Querschnitt ausgeführt, wodurch sich eine weitere Verringerung des Bauvolumens des erfindungsgemäßen Wirbelschichtreaktors erreichen läßt.

Um die Abscheideleistung des Abscheiders zu erhöhen, können gemäß einem weiteren Merkmal der Erfindung im Eintritt des Abscheiders fliehkrafterzeugende Strömungskörper angeordnet sein, die auch verstellbar ausgeführt sein können. Weiterhin ist es möglich, den Abscheider zugleich als Kühler auszubilden, wozu gemäß einem weiteren Merkmal der Erfindung im Abscheider auch zusätzliche Kühlwände angeordnet sein können.

Das erfindungsgemäße Verfahren zum Betrieb des voranstehend erläuterten Wirbelschichtreaktors ist dadurch gekennzeichnet, daß durch Einstellung der Anteile einerseits des der Ringkammer über den Boden zugeführten Trägergases und andererseits des über den Mantel der Ringkammer zugeführten Reaktionsgases in der Ringkammer ein quasi-stationärer Zustand des Wirbelbettes erzielt und im wesentlichen nur die durch die Verbrennung oder Vergasung entstehenden Rückstände sowie die verbrauchten Zuschlagstoffe unmittelbar aus der Ringkammer abgezogen werden.

Dieses erfindungsgemäße Verfahren hat gegenüber den bekannten Verfahren erhebliche energetische und verfahrenstechnische Vorteile, da das inerte Wirbelschichtmaterial im wesentlichen in der Wirbelschichtkammer verbleibt. Im Ringkammerboden ist lediglich eine Abzugsöffnung für die durch die Verbrennung einer Vergasung entstehenden Rückstände sowie für die verbrauchten Zuschlagstoffe ausgebildet. Aufwendige und verschleißanfällige Abführ- und Rückführleitungen für das Wirbelschichtmaterial entfallen.

Auf der Zeichnung sind zwei Ausführungsbeispiele des erfindungsgemäßen Wirbelschichtreaktors dargestellt, und zwar zeigen:

Fig. 1 einen senkrechten Schnitt durch ein erstes Ausführungsbeispiel eines schematisch dargestellten Wirbelschichtreaktors,

Fig. 2 die Hälfte eines waagerechten Schnitts gemäß der Schnittlinie II-II in Fig. 1 und

Fig. 3 einen senkrechten Schnitt durch einen schematisch dargestellten Dampferzeuger mit erfindungsgemäßem Wirbelschichtreaktor.

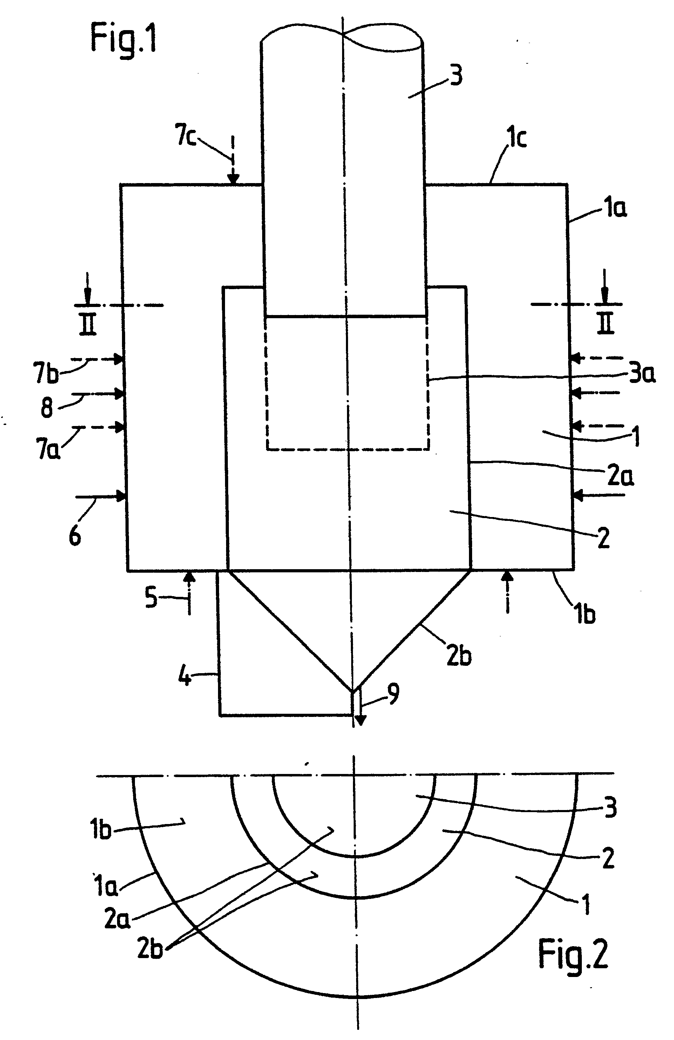

Der schematisch in den Figuren 1 und 2 dargestellte Wirbelschichtreaktor umfaßt eine beim Ausführungsbeispiel kreisförmige Ringkammer 1 mit einer kreiszylindrischen Außenwand 1a, einem kreisringförmigen Kammerboden 1b und einer kreisringförmigen Decke 1c. Selbstverständlich muß die Ringkammer 1 nicht rotationssymmetrisch ausgebildet sein. Sie kann auch einen rechteckigen, vorzugsweise quadratischen, oder vieleckigen Ringquerschnitt haben.

Innerhalb der Ringkammer 1 ist ein Abscheider 2 ausgebildet, dessen Außenwand 2a beim Ausführungsbeispiel zugleich die Innenwand der Ringkammer 1 bildet. Selbstverständlich können auch zwei Trennwände zwischen Ringkammer 1 und Abscheider 2 ausgebildet werden. Die Höhe des Abscheiders 2 ist geringer als die der Ringkammer 1. Durch die Decke 1c der Ringkammer 1 ist ein Gaskanal 3 zentral durch den oberen Teil der Ringkammer 1 hindurch bis in den oberen Teil des Abscheiders 2 hineingeführt. Auch dieser beim Ausführungsbeispiel mit kreisförmigem Querschnitt dargestellte Gaskanal 3 kann einen anderen Querschnitt haben. Der untere Teil des Abscheiders 2 wird durch einen konischen Trichterboden 2b gebildet, an dessen tiefster Stelle eine Rückführleitung 4 angeschlossen ist, durch die im Abscheider 2 abgeschiedene Feststoffe über den Kammerboden 1b in die Ringkammer 1 zurückgeführt werden können.

Das aus aus der Verbrennung oder Vergasung herrührender Asche und aus für die Direktentschwefelung bestimmten Zuschlagstoffen bestehende inerte Wirbelschichtmaterial wird mittels durch den Kammerboden 1b zugeführtem Trägergas 5 fluidisiert und als Wirbelschicht in quasi-stationärem Zustand in der Ringkammer 1 gehalten. Über die als Wärmetauschflächen ausgebildeten Außenwände 1a und 2a - sowie gegebenenfalls über weitere, in der Ringkammer 1 angeordnete Wärmetauschflächen - wird die Temperatur des Wirbelschichtmaterials auf einem Wert gehalten, der für eine Reaktion der brennbaren Stoffe 6 erforderlich ist, die der Ringkammer 1 durch die Außenwand 1a zugeführt werden. Mit Hilfe des Trägergases 5 ergibt sich im unteren Teil der sich in der Ringkammer 1 ausbildenden Wirbelschicht eine unterstöchiometrische Verbrennung. Die vollständige Verbrennung wird erst im oberen Teil der Ringkammer 1 durch vorzugsweise in mehreren Teil strömen 7a,7b zugeführtes Reaktionsgas erzielt. Über die Außenwand 1a werden der Ringkammer 1 schließlich Zuschlagstoffe 8 für die Direktentschwefelung der brennbaren Stoffe 6 in der Wirbelschicht zugeführt.

Das Trägergas 5 und/oder die Teilströme 7a,7b des Reaktionsgases können tangential oder zumindest mit einer tangentialen Strömungskomponente in die Ringkammer 1 eingeführt werden, so daß sich in der Ringkammer 1 eine Rotationsströmung ergibt. Diese hat einen längeren Reaktionsweg und damit eine längere Verweilzeit der brennbaren Stoffe und Zuschlagstoffe 8 in der Ringkammer 1 zur Folge, so daß sich günstigere Reaktionsbedingungen ergeben. Die Rotationsströmung in der Ringkammer 1 kann durch in der Decke 1c oder im Deckenbereich der Außenwand 1a angeordnete Düsen zur Zufuhr eines weiteren Reaktionsgasstromes 7c unterstützt werden.

Durch die Einstellung der Anteile einerseits des der Ringkammer 1 über den Kammerboden 1b zugeführten Trägergases 5 und andererseits des über die Außenwand 1a der Ringkammer 1 zugeführten Reaktionsgases 7a,7b kann in der Ringkammer 1 ein quasi-stationärer Zustand der Wirbelschicht erzielt werden, so daß im wesentlichen nur die durch die Verbrennung oder Vergasung entstehenden Rückstände sowie die verbrauchten Zuschlagstoffe 8 abgezogen werden müssen. Auf jeden Fall bildet sich im Bereich des oberen Endes des Abscheiders 2 in der Ringkammer 1 eine klare Begrenzung der Wirbelschicht aus, so daß der in Strömungsrichtung nachfolgende Gaskanal 3 nur eine geringe Feststoffbelastung erfährt.

Beim Ausführungsbeispiel gemäß Fig. 1 ist mit gestrichelten Linien angedeutet, daß der Gaskanal 3 nach unten in den Abscheider 2 in der Art eines Tauchrohres verlängert sein kann, wobei zumindest dieser Verlängerungsteil 3a vorzugsweise als Wärmetauscherfläche ausgebildet wird. Auch der Trichterboden 2b des Abscheiders 2 kann als Wärmetauscherfläche in der Art eines Rieselkühlers ausgebildet sein.

Die feststoffbeladenen Rauchgase verlassen die Ringkammer 1 mit einer radial einwärts gerichteten Strömungsrichtung und treten von oben her in den Abscheider 2 ein. Im Abscheider 2 erfolgt eine Trennung der Rauchgase von den Feststoffpartikeln, wobei sich eine Art Fliehkraftabscheidung ergibt, wenn in der Ringkammer 1 eine Rotationsströmung ausgebildet worden ist. Während die Rauchgase mit nur noch geringer Feststoffbelastung in die nachgeschalteten Berührungsheizflächen nach oben durch den Gaskanal 3 abgeführt werden, sammeln sich die abgeschiedenen Feststoffe auf dem Trichterboden 2b des Abscheiders 2 und werden an dessen tiefster Stelle abgezogen. Während die inerten Feststoffe über die Rückführleitung 4 durch den Kammerboden 1b erneut der Ringkammer 1 aufgegeben werden, werden überschüssige Rückstände aus Verbrennung oder Vergasung ebenso wie verbrauchte Zuschlagstoffe über eine Leitung 9 abgeführt.

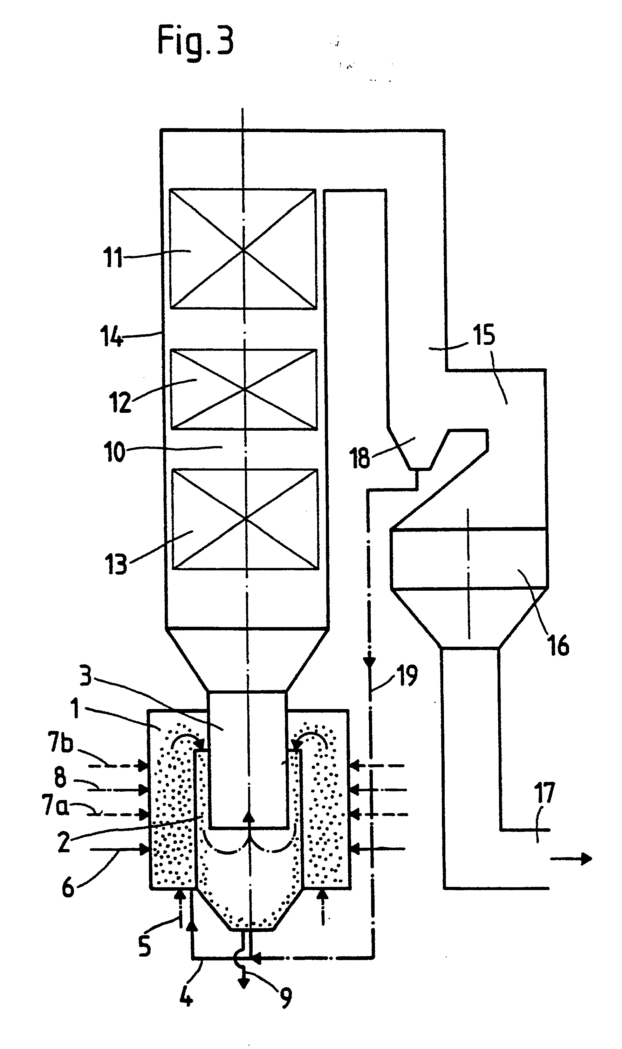

In Fig. 3 ist der Einsatz des voranstehend beschriebenen Wirbelschichtreaktors als Brennkammer eines Dampferzeugers dargestellt.

Die Zeichnung zeigt schematisch die Ringkammer 1, den Abscheider 2 und den Gaskanal 3 des Wirbelschichtreaktors, einschließlich der Zuführung des Trägergases 5, des brennbaren Stoffes 6, des Reaktionsgases 7a,7b und der Zuschlagstoffe 8. Auch die Rückführleitung 4 und die Leitung 9 zum Abzug überschüssiger Feststoffe ist eingezeichnet.

Oberhalb des Gaskanals 3 ist der Rauchgaszug 10 eines Dampferzeugers angeordnet, in dem ein Speisewasservorwärmer 11, ein Zwischenüberhitzer 12 und ein Endüberhitzer 13 als Berührungsheizflächen angeordnet sind. Die Wände des Rauchgaszuges 10 sind als Verdampferheizflächen 14 ausgeführt. An den senkrecht oberhalb des Wirbelschichtreaktors angeordneten Rauchgaszug 10 schließt sich ein abwärts führender Gaszug 15 an, in dem ein Luftvorwärmer 16, beispielsweise ein Regenerativ-Luftvorwärmer angeordnet ist. Das diesen Luftvorwärmer 16 verlassende Rauchgas gelangt durch einen Gaskanal 17 zum nachgeschalteten Entstauber, der auf der Zeichnung nicht dargestellt ist.

Im abgewinkelten Teil des Gaszuges 15 ist beim Ausführungsbeispiel noch ein Aschefangtrichter 18 ausgebildet, der über eine Ascherückführleitung 19 mit dem Wirbelschichtreaktor verbunden ist. Beim Ausführungsbeispiel mündet die Ascherückführleitung 19 in der Rückführleitung 4.

Auch die Fig. 3 läßt erkennen, daß durch den ringförmigen Aufbau der Wirbelschichtkammer und die Anordnung eines innenliegenden Abscheiders 2 aus den die Wirbelschicht verlassenden Rauchgasen die Feststoffe über ein zentrales Abscheidesystem entfernt werden, so daß die Rauchgase hinter dem Abscheider 2 nur noch eine geringe Feststoffbelastung haben, wodurch Erosionen in den Berührungsheizflächen 11,12,13 im wesentlichen vermieden werden können. Die zentrale Anordnung des Abscheiders 2 ermöglicht weiterhin eine vergleichsweise kompakte Bauweise des gesamten Wirbelschichtreaktors. Schließlich werden durch die Ausbildung der Wirbelschicht in einer Ringkammer bei gleicher thermischer Leistung vergleichsweise geringe Wirbelschichttiefen verwirklicht, die einerseits die Reaktionsbedingungen verbessern und andererseits die Erstellung größerer Leistungen des einzelnen Wirbelschichtreaktors ermöglichen.

## Bezugszeichenliste

1 Ringkammer
1a Außenwand
1b Kammerboden
1c Decke
2 Abscheider
2a Außenwand
2b Trichterboden
3 Gaskanal
3a Verlängerung
4 Rückführleitung
5 Trägergas
6 brennbarer Stoff
7a Reaktionsgas
7b Reaktionsgas
7c Reaktionsgas
8 Zuschlagstoffe
9 Leitung
10 Rauchgaszug
11 Speisewasservorwärmer
12 Zwischenüberhitzer
13 Endüberhitzer
14 Verdampferheizfläche
15 Gaszug
16 Luftvorwärmer
17 Gaskanal
18 Aschefangtrichter
19 Ascherückführleitung

## Ansprüche

1. Wirbelschichtreaktor zur schadstoffarmen Verbrennung oder Vergasung von brennbaren Stoffen in gasförmiger, flüssiger oder fester Form, insbesondere von fossilen Brennstoffen und/oder industriellen sowie landwirtschaftlichen Rückständen, unter Zugabe von schadstoffreduzierenden und/oder schadstoffbindenden Zuschlagstoffen mit einer Kammer, in der inertes Wirbelschichtmaterial, vorzugsweise aus der Verbrennung oder Vergasung herrührende Asche und Zuschlagstoffe, durch mindestens teilweise durch den Kammerboden zugeführtes Trägergas fluidisiert und zur Verbrennung bzw. Vergasung der brennbaren Stoffe auf die hierfür erforderliche Reaktionstemperatur gebracht wird und in der die brennbaren Stoffe im unteren Teil der Kammer durch das Trägergas unterstöchiometrisch und im oberen Teil durch in mehreren Teilströmen zugeführtes Reaktionsgas verbrannt bzw. vergast werden, wobei das durch die Verbrennung bzw. Vergasung entstehende überschüssige Wirbelschichtmaterial abgezogen wird,
**dadurch gekennzeichnet,**
daß die Kammer als Ringkammer (1) ausgebildet und an ihrem ringförmigen Austrittsquerschnitt an einen innenliegenden Abscheider (2) angeschlossen ist, der seinerseits an einen Gaskanal (3) angeschlossen und mit einem Abzug (4) für das abgeschiedene Material versehen ist.

2. Wirbelschichtreaktor nach Anspruch 1, dadurch gekennzeichnet, daß das Trägergas (5) und/oder das Reaktionsgas (7a,7b,7c) tangential oder zumindest mit einer tangentialen Strömungskomponente in die Ringkammer (1) eingeführt wird.

3. Wirbelschichtreaktor nach Anspruch 1 oder 2, dadurch gekennzeichnet, daß außer den Wänden (1a,2a) der Ringkammer (1) zusätzliche Wärmetauschflächen in der Ringkammer (1) und/oder im Abscheider (2) angeordnet sind.

4. Wirbelschichtreaktor nach Anspruch 3, dadurch gekennzeichnet, daß die zusätzlichen Wärmetauschflächen als rohrförmige Verlängerung (3a) des Gaskanals (3) im Abscheider (2) ausgebildet sind.

5. Wirbelschichtreaktor nach mindestens einem der Ansprüche 1 bis 4, dadurch gekennzeichnet, daß im Eintritt des Abscheiders (2) fliehkrafterzeugende Strömungskörper angeordnet sind.

6. Wirbelschichtreaktor nach Anspruch 5, dadurch gekennzeichnet, daß die Strömungskörper verstellbar sind.

7. Wirbelschichtreaktor nach mindestens einem der Ansprüche 1 bis 6, dadurch gekennzeichnet, daß der Abscheider (2) zugleich als Kühler ausgebildet ist.

8. Wirbelschichtreaktor nach Anspruch 7, dadurch gekennzeichnet, daß im Abscheider (2) zusätzliche Kühlwände angeordnet sind.

9. Verfahren zum Betrieb eines Wirbelschichtreaktors nach mindestens einem der Ansprüche 1 bis 8, dadurch gekennzeichnet, daß durch Einstellung der Anteile einerseits des der Ringkammer (1) über den Kammerboden (1b) zugeführten Trägergases (5) und andererseits des über die Außenwand (1a) der Ringkammer (1) zugeführten Reaktionsgases (7a,7b,7c) in der Ringkammer (1) ein quasi-stationärer Zustand der Wir belschicht erzielt und im wesentlichen nur die durch die Verbrennung oder Vergasung entstehenden Rückstände des brennbaren Stoffes (6) sowie die verbrauchten Zuschlagstoffe (8) unmittelbar aus der Ringkammer (1) abgezogen werden.

10. Wirbelschichtreaktor zur Durchführung des Verfahrens nach Anspruch 9, dadurch gekennzeichnet, daß im Ringkammerboden (1b) mindestens eine Abzugsöffnung für die durch die Verbrennung oder Vergasung entstandenen Rückstände sowie für die verbrauchten Zuschlagstoffe (8) ausgebildet ist.

# Fig.1

# Fig.2

## Fig.3

**Europäisches Patentamt**

# EUROPÄISCHER RECHERCHENBERICHT

Nummer der Anmeldung

**EP 90 11 3026**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 441 923 (WIESER)<br>* Zusammenfassung; Seite 11, letzter Absatz; Seite 12, Absätze 1,2; Seite 14, Absätze 3,5; Seite 15, Absätze 1,4,5; Seite 18, letzter Absatz; Seite 21, Zeile 1 - Seite 22, Zeile 23; Seite 23, Absätze 3,4,6 * | 1,2,3,7,9, 10 | F 23 C 11/02<br>F 23 J 3/04<br>B 01 J 8/18 |
| Y | FR-A-2 400 670 (WORMSER)<br>* Seite 11, Zeile 13 - Seite 12, Zeile 17; Seite 12, Zeile 30 - Seite 13, Zeile 35; Figur 4 * | 1,2,3,7,9, 10 | |
| A | DE-A-3 417 445 (FÖRSTER)<br>* Seite 8, Zeile 8 - Seite 10, Zeile 7; Seite 10, Zeile 20 - Seite 11, Zeile 22; Figuren 1,5 * | 1,10 | |
| A | AU-B-5 634 81 (THOMPSON PARK)<br>* Seite 8, Zeilen 1-30; Figuren 2,3 * | 2 | |
| A | EP-A-0 145 808 (TÜZELESTECHNIKAI KUTATO-ES FEJLESZTÖ)<br>* Patentanspruch 1; Figur 1 * | 4,7,8 | |
| A | EP-A-0 111 275 (KERNFORSCHUNGSANLAGE JÜLICH)<br>* Seite 3, Zeilen 25-36; Figuren 1,3 * | 5 | RECHERCHIERTE SACHGEBIETE (Int. Cl.5) |
| A | PATENT ABSTRACTS OF JAPAN, Band 9, Nr. 80 (M-370)[1803], 10. April 1985;<br>& JP-A-59 210 204 (BABCOCK) 28-11-1984 | 5,6 | F 23 C<br>F 23 J<br>B 01 J |
| A | US-A-4 546 709 (ASTRÖM) | | |

Der vorliegende Recherchenbericht wurde für alle Patentansprüche erstellt

| Recherchenort | Abschlußdatum der Recherche | Prüfer |
|---|---|---|
| Den Haag | 28 November 90 | PHOA Y.E. |